# EUROPEAN PATENT APPLICATION

(11) **EP 4 468 288 A1**
(43) Date of publication of application: **27.11.2024**
(21) Application number: 23743144.0
(22) Date of filing: 10.01.2023
(51) Int. Cl.: G10L 15/22, G06F 3/01, G06F 3/16, G10L 15/10

(54) **AUDIO PROCESSING DEVICE, AUDIO PROCESSING METHOD, AND AUDIO PROCESSING SYSTEM**

(30) Priority: 21.01.2022 JP 2022008227
(71) Applicant: Kyocera Corporation, Kyoto-shi, Kyoto 612-8501 (JP)
(72) Inventor: KANAOKA Toshikazu, Kyoto-shi, Kyoto 612-8501 (JP); NAGAO Shotaro, Kyoto-shi, Kyoto 612-8501 (JP); OSUMI Kousuke, Kyoto-shi, Kyoto 612-8501 (JP)
(74) Representative: Viering, Jentschura & Partner mbB Patent- und Rechtsanwälte
(86) International application number: PCT/JP2023/000333
(87) International publication number: WO 2023/140149

(57) **Abstract**

An audio processing apparatus includes a controller. The controller acquires a result of an audio recognition process for recognizing audio from audio data. In response to audio satisfying a set condition being detected based on the result of the audio recognition process, the controller notifies a user that the audio satisfying the set condition has been detected, in accordance with a notification condition corresponding to the detected audio. The set condition is set in advance for audio. The notification condition is set for the detected audio in the set condition.

## Description

### CROSS-REFERENCE TO RELATED APPLICATIONS

This application claims priority from Japanese Patent Application No. 2022-008227 filed in Japan on January 21, 2022, the entire disclosure of which is incorporated herein by reference.

### TECHNICAL FIELD

The present disclosure relates to an audio processing apparatus, an audio processing method, and an audio processing system.

### BACKGROUND OF INVENTION

In the related art, a known technology allows a user to hear sound of surroundings while wearing an audio output device such as a headphone or earphone. In such a technology, a known portable music player includes a notification means that issues, when external sound matches a predetermined phrase, a notification about the match from a headphone (Patent Literature 1).

### CITATION LIST

### PATENT LITERATURE

Patent Literature 1: Japanese Unexamined Patent Application Publication No. 2001-256771

### SUMMARY

In one embodiment of the present disclosure, an audio processing apparatus includes a controller.

The controller acquires a result of an audio recognition process for recognizing audio from audio data. In response to audio satisfying a set condition being detected based on the result of the audio recognition process, the controller notify a user that the audio satisfying the set condition has been detected, in accordance with a notification condition corresponding to the detected audio. The set condition is set in advance for audio. The notification condition is set for the detected audio in the set condition.

In one embodiment of the present disclosure, an audio processing method includes:
acquiring a result of an audio recognition process for recognizing audio from audio data; and
in response to audio satisfying a set condition being detected based on the result of the audio recognition process, notifying a user that the audio satisfying the set condition has been detected, in accordance with a notification condition corresponding to the detected audio, the set condition being set in advance for audio, the notification condition being set for the detected audio in the set condition.

In one embodiment of the present disclosure, an audio processing system includes a sound collector and an audio processing apparatus.

The sound collector collects sound of surroundings.

The audio processing apparatus acquires a result of an audio recognition process for recognizing audio from audio data of the sound collected by the sound collector. In response to audio satisfying a set condition being detected based on the result of the audio recognition process, the audio processing apparatus notifies a user that the audio satisfying the set condition has been detected, in accordance with a notification condition corresponding to the detected audio. The set condition is set in advance for audio. The notification condition is set for the detected audio in the set condition.

### BRIEF DESCRIPTION OF THE DRAWINGS

FIG. 1 is a diagram illustrating a schematic configuration of an audio processing system according to one embodiment of the present disclosure.
FIG. 2 is a block diagram of the audio processing system illustrated in FIG. 1.
FIG. 3 is a diagram illustrating an example of a search list.
FIG. 4 is a diagram illustrating an example of a notification sound list.
FIG. 5 is a diagram for describing a notification means and a notification timing corresponding to a priority.
FIG. 6 is a diagram illustrating an example of a main screen.
FIG. 7 is a diagram illustrating an example of a setting screen.
FIG. 8 is a diagram illustrating an example of a notification screen.
FIG. 9 is a diagram for describing an example of a process of an interval detection unit illustrated in FIG. 2.
FIG. 10 is a block diagram of an utterance accumulating unit illustrated in FIG. 2.
FIG. 11 is a flowchart illustrating an operation of an event detection process performed by an audio processing apparatus illustrated in FIG. 2.
FIG. 12 is a flowchart illustrating an operation of a playback data output process performed by the audio processing apparatus illustrated in FIG. 2.
FIG. 13 is a flowchart illustrating the operation of the playback data output process performed by the audio processing apparatus illustrated in FIG. 2.
FIG. 14 is a diagram illustrating a schematic configuration of an audio processing system according to another embodiment of the present disclosure.
FIG. 15 is a diagram illustrating a schematic configuration of an audio processing system according to still another embodiment of the present disclosure.

### DESCRIPTION OF EMBODIMENTS

The related art has room for improvement. For example, depending on the content of detected audio, a user sometimes desires to preferentially receive a notification that the audio has been detected or sometimes does not desire to preferentially receive the notification. One embodiment of the present disclosure can provide an improved audio processing apparatus, audio processing method, and audio processing system.

In the present disclosure, "audio" encompasses any sound. For example, "audio" encompasses a voice uttered by a person, sound output by a machine, a bark made by an animal, an environmental sound, etc.

Embodiments according to the present disclosure are described below with reference to the drawings.

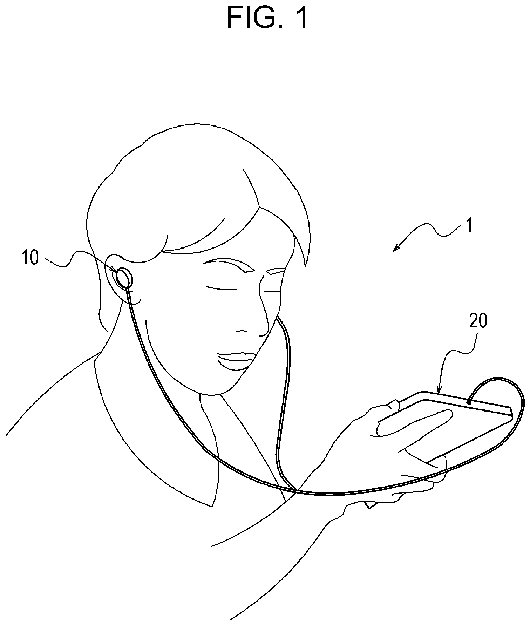

As illustrated in FIG. 1, an audio processing system 1 includes a sound collector 10 and an audio processing apparatus 20. The sound collector 10 and the audio processing apparatus 20 can communicate with each other via a communication line. The communication line includes at least one of a wired line or a wireless line.

In the present embodiment, the sound collector 10 is an earphone. However, the sound collector 10 is not limited to the earphone. The sound collector 10 may be a headphone or the like. The sound collector 10 is worn by a user. The sound collector 10 can output music or the like. The sound collector 10 may include an earphone unit to be worn to the left ear of the user and an earphone unit to be worn on the right side of the user.

The sound collector 10 collects sound of surroundings of the sound collector 10. The sound collector 10 is worn by the user, and thus collects sound of surroundings of the user. The sound collector 10 outputs the collected sound of surroundings of the user, based on control of the audio processing apparatus 20. With such a configuration, the user can hear the sound of surroundings of the user while wearing the sound collector 10.

In the present embodiment, the audio processing apparatus 20 is a terminal apparatus. The terminal apparatus serving as the audio processing apparatus 20 is, for example, a mobile phone, a smartphone, a tablet, or a PC (Personal Computer). However, the audio processing apparatus 20 is not limited to the terminal apparatus.

The audio processing apparatus 20 is operated by a user. The user can make settings or the like of the sound collector 10 by operating the audio processing apparatus 20.

The audio processing apparatus 20 controls the sound collector 10 to collect sound of surroundings of the user. In response to detecting audio satisfying a set condition set in advance from the collected sound of surroundings of the user, the audio processing apparatus 20 notifies the user that the audio satisfying the set condition has been detected. Details of this process are described later.

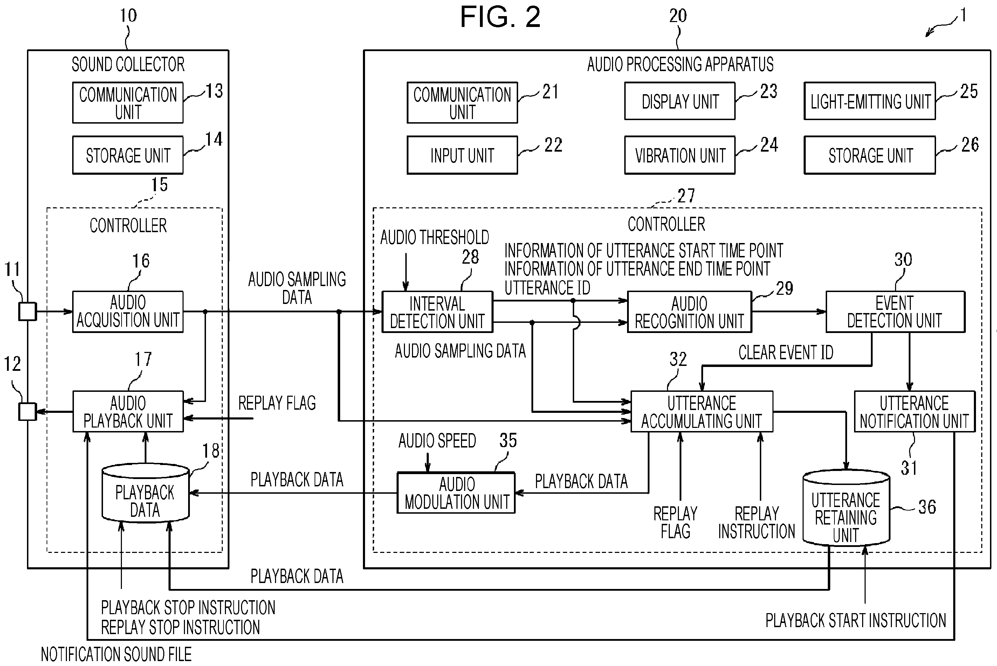

FIG. 2 is a block diagram of the audio processing system 1 illustrated in FIG. 1. In FIG. 2, a solid line represents a major flow of data or the like.

The sound collector 10 includes a microphone 11, a speaker 12, a communication unit 13, a storage unit 14, and a controller 15.

The microphone 11 can collect sound of surroundings of the sound collector 10. The microphone 11 includes a left microphone and a right microphone. The left microphone may be included in the earphone unit that is included in the sound collector 10 and is to be worn to the left ear of the user. The right microphone may be included in the earphone unit that is included in the sound collector 10 and is to be worn on the right side of the user. For example, the microphone 11 is a stereo microphone or the like.

The speaker 12 can output sound. The speaker 12 includes a left speaker and a right speaker. The left speaker may be included in the earphone unit that is included in the sound collector 10 and is to be worn to the left ear of the user. The right speaker may be included in the earphone unit that is included in the sound collector 10 and is to be worn on the right side of the user. For example, the speaker 12 is a stereo speaker or the like.

The communication unit 13 includes at least one communication module that can communicate with the audio processing apparatus 20 via a communication line. The communication module is a communication module conforming to a standard of the communication line. The standard of the communication line is, for example, a wired communication standard or a short-range wireless communication standard including Bluetooth (registered trademark), infrared, and NFC (Near Field Communication).

The storage unit 14 includes at least one semiconductor memory, at least one magnetic memory, at least one optical memory, or a combination of at least two of these memories. The semiconductor memory is, for example, a RAM (Random Access Memory) or a ROM (Read Only Memory). The RAM is, for example, an SRAM (Static Random Access Memory) or a DRAM (Dynamic Random Access Memory). The ROM is, for example, an EEPROM (Electrically Erasable Programmable Read Only Memory). The storage unit 14 may function as a main storage device, an auxiliary storage device, or a cache memory. The storage unit 14 stores data used in an operation of the sound collector 10 and data obtained by an operation of the sound collector 10. For example, the storage unit 14 stores a system program, an application program, embedded software, and the like.

The controller 15 includes at least one processor, at least one dedicated circuit, or a combination thereof. The processor is a general-purpose processor such as a CPU (Central Processing Unit) or a GPU (Graphics Processing Unit), or a dedicated processor specialized for specific processing. The dedicated circuit is, for example, an FPGA (Field-Programmable Gate Array) or an ASIC (Application Specific Integrated Circuit). The controller 15 performs a process related to the operation of the sound collector 10 while controlling each unit of the sound collector 10.

In the present embodiment, the controller 15 includes an audio acquisition unit 16, an audio playback unit 17, and an accumulating unit 18. The accumulating unit 18 includes the same or similar component as or to the component of the storage unit 14. At least part of the accumulating unit 18 may be part of the storage unit 14. An operation of the accumulating unit 18 is performed by the processor or the like of the controller 15.

From analog audio data of the sound collected by the microphone 11, the audio acquisition unit 16 acquires digital audio data. In the present embodiment, the audio acquisition unit 16 performs sampling on the analog audio data at a sampling rate set in advance, and thus acquires audio sampling data as the digital audio data.

The audio acquisition unit 16 outputs the audio sampling data to the audio playback unit 17. The audio acquisition unit 16 also transmits the audio sampling data to the audio processing apparatus 20 via the communication unit 13.

When the microphone 11 includes the left microphone and the right microphone, the audio acquisition unit 16 may acquire left audio sampling data from analog audio data of sound collected by the left microphone. The audio acquisition unit 16 may also acquire right audio sampling data from analog audio data of sound collected by the right microphone. The audio acquisition unit 16 may transmit the left audio sampling data and the right audio sampling data to the audio processing apparatus 20 via the communication unit 13. When the left audio sampling data and the right audio sampling data are not particularly distinguished from each other, these are also simply referred to as "audio sampling data".

The audio playback unit 17 acquires the audio sampling data from the audio acquisition unit 16. The audio playback unit 17 receives a replay flag from the audio processing apparatus 20 via the communication unit 13.

The replay flag is set to true or false. When the replay flag is false, the audio processing system 1 operates in a through mode. The through mode is a mode in which the audio data of the sound collected by the sound collector 10 is output from the sound collector 10 without through the audio processing apparatus 20. When the replay flag is true, the audio processing system 1 operates in a playback mode. The playback mode is a mode in which the sound collector 10 outputs playback data acquired from the audio processing apparatus 20. A condition under which the replay flag is set to true or false is described later.

When the replay flag is false, that is, when the audio processing system 1 is in the through mode, the audio playback unit 17 causes the speaker 12 to output the audio sampling data acquired from the audio acquisition unit 16.

When the replay flag is true, that is, when the audio processing system 1 is in the playback mode, the audio playback unit 17 causes the speaker 12 to output the playback data accumulated in the accumulating unit 18.

The audio playback unit 17 receives a notification sound file from the audio processing apparatus 20 via the communication unit 13. The notification sound file is transmitted from the audio processing apparatus 20 to the audio playback unit 17 when the audio processing apparatus 20 detects audio satisfying the set condition. Upon receiving the notification sound file, the audio playback unit 17 causes the speaker 12 to output notification sound. With such a configuration, the user can learn that the audio satisfying the set condition has been detected.

The playback data is accumulated in the accumulating unit 18. The playback data is data transmitted from the audio processing apparatus 20 to the sound collector 10. Upon receiving the playback data from the audio processing apparatus 20 via the communication unit 13, the controller 15 causes the received playback data to be accumulated in the accumulating unit 18. The controller 15 may receive a playback stop instruction and a replay stop instruction, which are described later, from the audio processing apparatus 20 via the communication unit 13. Upon receiving the playback stop instruction or the replay stop instruction, the controller 15 deletes the playback data accumulated in the accumulating unit 18.

The controller 15 may receive left playback data and right playback data from the audio processing apparatus 20, and store these pieces of playback data in the accumulating unit 18. In this case, the audio playback unit 17 may cause the left speaker of the speaker 12 to output the left playback data accumulated in the accumulating unit 18 and cause the right speaker of the speaker 12 to output the right playback data accumulated in the accumulating unit 18.

The audio processing apparatus 20 includes a communication unit 21, an input unit 22, a display unit 23, a vibration unit 24, a storage unit 26, and a controller 27.

The communication unit 21 includes at least one communication module that can communicate with the sound collector 10 via a communication line. The communication module is a communication module conforming to a standard of the communication line. The standard of the communication line is, for example, a wired communication standard or a short-range wireless communication standard including Bluetooth (registered trademark), infrared, and NFC.

The communication unit 21 may further include at least one communication module that can be connected to any network including a mobile communication network and Internet. The communication module is, for example, a communication module conforming to a mobile communication standard such as LTE (Long Term Evolution), 4G (4th Generation), or 5G (5th Generation).

The input unit 22 can receive an input from a user. The input unit 22 includes at least one input interface that can receive an input from a user. The input interface is, for example, a physical key, an electrostatic capacitive key, a pointing device, a touch screen integrated with a display, or a microphone.

The display unit 23 can display data. The display unit 23 is, for example, a display. The display is, for example, an LCD (Liquid Crystal Display) or an organic EL (Electro Luminescence) display.

The vibration unit 24 can vibrate the audio processing apparatus 20. The vibration unit 24 includes a vibrating element. The vibrating element is, for example, a piezoelectric element.

A light-emitting unit 25 can emit light. The light-emitting unit 25 is, for example, an LED (Light-Emitting Diode).

The storage unit 26 includes at least one semiconductor memory, at least one magnetic memory, at least one optical memory, or a combination of at least two kinds of these memories. The semiconductor memory is, for example, a RAM or a ROM. The RAM is, for example, an SRAM or a DRAM. The ROM is, for example, an EEPROM. The storage unit 26 may function as a main storage device, an auxiliary storage device, or a cache memory. The storage unit 26 stores data used in an operation of the audio processing apparatus 20 and data obtained by an operation of the audio processing apparatus 20. For example, the storage unit 26 stores a system program, an application program, embedded software, and the like.

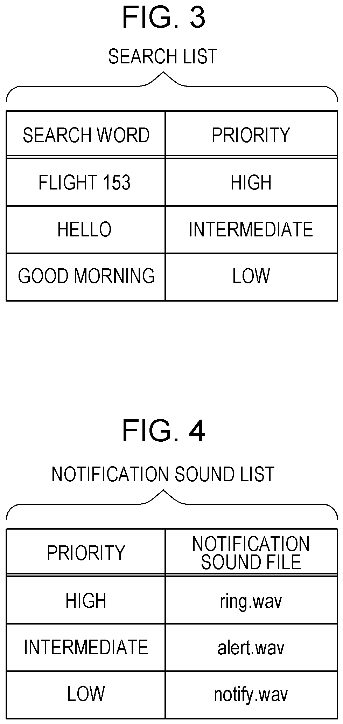

The storage unit 26 stores, for example, a search list illustrated in FIG. 3 described later, and a notification sound list and a notification sound file illustrated in FIG. 4 described later. The storage unit 26 stores, for example, a notification list described later.

The controller 27 includes at least one processor, at least one dedicated circuit, or a combination thereof. The processor is a general-purpose processor such as a CPU or a GPU, or a dedicated processor specialized for specific processing. The dedicated circuit is, for example, an FPGA or an ASIC. The controller 27 performs a process related to the operation of the audio processing apparatus 20 while controlling each unit of the audio processing apparatus 20.

The controller 27 performs an audio recognition process for recognizing audio on the audio data. Note that the controller 27 may acquire a result of the audio recognition process performed by an external apparatus. When the controller 27 detects audio satisfying the set condition, based on the result of the audio recognition process, the controller 27 notifies the user that the audio satisfying the set condition has been detected. The set condition is a condition set in advance for audio. In accordance with a notification condition corresponding to the detected audio set in the set condition, the controller 27 notifies the user that the audio satisfying the set condition has been detected.

The notification condition is a condition for determining a priority order of notifying the user that the audio has been detected. As the priority order is higher, the timing of notifying the user may be earlier. As the priority order is higher, the user may be notified by a notification means that is easier for the user to notice. For example, as described above, the user wears an earphone that is the sound collector 10. Therefore, when sound such as notification sound is output from the sound collector 10, the user can immediately notice the sound. That is, the priority order of a notification means by sound such as notification sound is higher than that of a notification means by presentation of visual information or the like. As described later, the controller 27 may play the detected audio to notify the user that the audio has been detected. In this case, as the priority order is higher, the timing of playing the detected audio may be earlier. When the priority order is low, the detected audio may be played at any timing.

The notification condition includes a first condition and a second condition. The priority order of notifying the user is lower when the notification condition satisfies the second condition than when the notification condition satisfies the first condition. The first condition includes a third condition and a fourth condition. The priority order of notifying the user is lower when the notification condition satisfies the fourth condition than when the notification condition satisfies the third condition.

In the present embodiment, the notification condition is set by a priority. The priority indicates a priority order of notifying the user of the audio satisfying the set condition. The priority may be set in multiple levels. As the priority is higher, the priority order of notifying the user is higher. In the present embodiment, as illustrated in FIGs. 3 and 4, the priority is set in three levels including "high", "intermediate", and "low". The priority "high" is the highest priority among the three priority levels. The priority "intermediate" is an intermediate priority among the three priority levels. The priority "low" is the lowest priority among the three priority levels.

In the present embodiment, the notification condition satisfying the first condition is that a condition that the priority is "high" or "intermediate" is satisfied. The notification condition satisfying the second condition is that a condition that the priority is "low" is satisfied. The notification condition satisfying the third condition is that a condition that the priority is "high" is satisfied. The notification condition satisfying the fourth condition is that a condition that the priority is "intermediate" is satisfied.

When the notification condition corresponding to the detected audio satisfies the first condition, that is, when the priority corresponding to the detected audio is "intermediate" or "high", the controller 27 may play the notification sound to notify the user that the audio satisfying the set condition has been detected. With such a configuration, the user can immediately notice that the audio has been detected.

When the notification condition corresponding to the detected audio satisfies the first condition, that is, when the priority corresponding to the detected audio is "intermediate" or "high", the controller 27 may play the notification sound and then play the audio satisfying the set condition. With such a configuration, the detected audio is automatically played when the priority is "intermediate" or "high". When the priority is "intermediate" or "high", the user is likely to desire to immediately check the content of the detected audio. When the notification condition satisfies the first condition, the audio satisfying the set condition is automatically played, so that the user can immediately check the detected audio. This thus can improve the user's convenience.

When the notification condition corresponding to the detected audio satisfies the second condition, that is, when the priority corresponding to the detected audio is "low", the controller 27 may present visual information to the user to notify the user that the audio satisfying the set condition has been detected. When the priority is "low", the controller 27 presents the visual information to the user instead of playing the notification sound, so that a notification corresponding to the low priority can be made.

In the present embodiment, the set condition is a condition that the detected audio includes a search word set in advance. A priority is set for each search word. The search word includes, for example, at least one of a character or a numeral. The search word may be any information that can be processed as text data. In the present embodiment, when the controller 27 detects an utterance including a search word, as the audio satisfying the set condition, the controller 27 notifies the user that such an utterance has been detected.

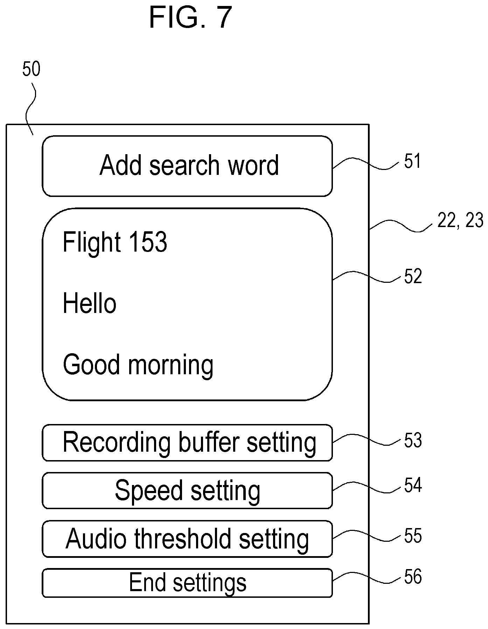

FIG. 3 illustrates a search list. In the search list, a search word and a priority set for the search word are associated with each other. The priority "high" is set for a search word "flight 153". The priority "intermediate" is set for a search word "hello". The priority "low" is set for a search word "good morning". For example, the controller 27 generates the search list, based on an input from the user to a setting screen 50 illustrated in FIG. 7 described later.

FIG. 4 illustrates a notification sound list. In the notification sound list, a priority and notification sound set for the priority are associated with each other. The notification sound is used when the user is notified that the utterance has been detected. In the present embodiment, the notification sound is used also when an utterance corresponding to the priority "low" is detected. However, when an utterance corresponding to the priority "low" is detected, the notification sound need not be used. In FIG. 4, a priority is associated with a notification sound file. The notification sound file is a file that enables storage of notification sound in a computer. A notification sound file "ring.wav" is associated with the priority "high". A notification sound file "alert.wav" is associated with the priority "intermediate". A notification sound file "notify.wav" is associated with the priority "low".

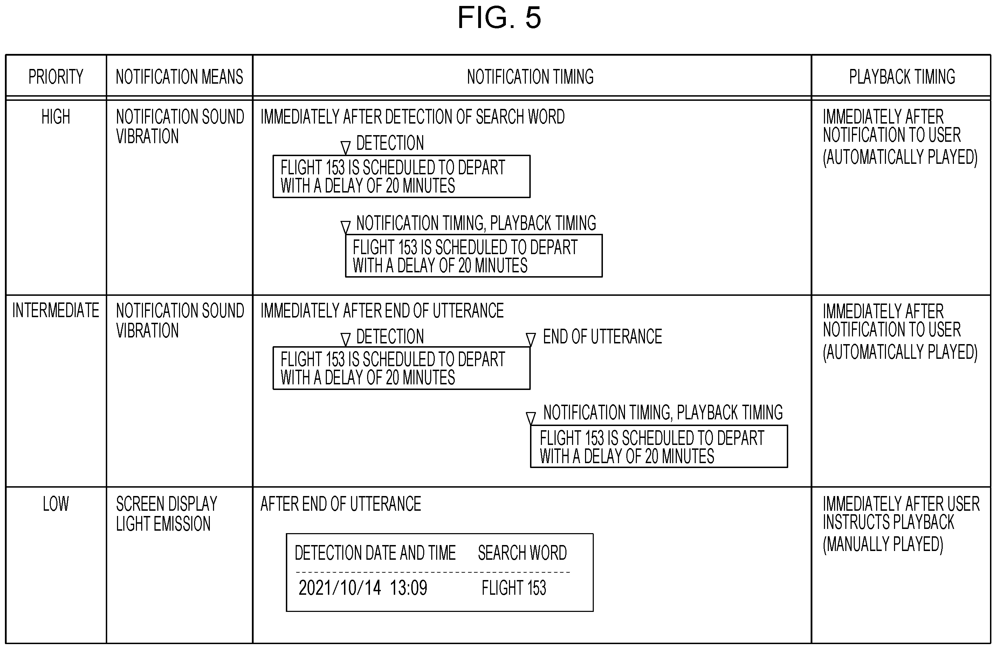

The notification corresponding to the priority according to the present embodiment is described with reference to FIG. 5. In FIG. 5, a notification means is a means by which the user is notified that an utterance including a search word has been detected. A notification timing is a timing at which the user is notified that the utterance including the search word has been detected. A playback timing is a timing at which the detected utterance is played.

As illustrated in FIG. 5, when the controller 27 detects an utterance corresponding to the priority "high", the controller 27 uses, as the notification means, notification sound and vibration by the vibration unit 24. The controller 27 sets the notification timing to a timing immediately after the search word is detected. The controller 27 sets the playback timing to a timing immediately after a notification that the utterance has been detected is made. That is, when the notification condition satisfies the third condition, the controller 27 performs control with which, immediately after the search word is detected, the notification sound is played and playback of the utterance is started. For example, suppose that the priority "high" is set for the search word "flight 153". In this case, the controller 27 sets, as the notification timing, a timing immediately after the search word "flight 153" is detected. That is, the controller 27 causes the vibration unit 24 to vibrate and plays the notification sound immediately after detecting the search word "flight 153". The controller 27 sets, as the playback timing, a timing immediately after the notification sound is played, and performs control with which an utterance "Flight 153 is scheduled to depart with a delay of 20 minutes" is played. With such a configuration, immediately after the search word "flight 153" is detected, the notification sound is played and playback of the utterance "Flight 153 is scheduled to depart with a delay of 20 minutes" is started. The utterance including the search word is automatically played.

As illustrated in FIG. 5, when the controller 27 detects an utterance corresponding to the priority "intermediate", the controller 27 uses, as the notification means, notification sound and vibration by the vibration unit 24. The controller 27 sets the notification timing to a timing immediately after the utterance including the search word ends. The controller 27 sets the playback timing to a timing immediately after a notification that the utterance has been detected is made. That is, when the notification condition satisfies the fourth condition, the controller 27 performs control with which immediately after the utterance including the search word ends, the notification sound is played and playback of the utterance is started. For example, suppose that the priority "intermediate" is set for the search word "flight 153". In this case, the controller 27 sets, as the notification timing, a timing immediately after the utterance "Flight 153 is scheduled to depart with a delay of 20 minutes" ends, and causes the vibration unit 24 to vibrate and plays the notification sound. The controller 27 sets, as the playback timing, a timing immediately after the notification sound is played, and performs control with which the utterance "Flight 153 is scheduled to depart with a delay of 20 minutes" is played. With such a configuration, immediately after the utterance "Flight 153 is scheduled to depart with a delay of 20 minutes" ends, the notification sound is played and playback of the utterance "Flight 153 is scheduled to depart with a delay of 20 minutes" is started. The utterance including the search word is automatically played.

As illustrated in FIG. 5, when the controller 27 detects an utterance corresponding to the priority "low", the controller 27 uses, as the notification means, screen display by the display unit 23 and light emission by the light-emitting unit 25. The screen display and the light emission are an example of the notification means by which visual information is presented to the user. The controller 27 causes the display unit 23 to display the notification list as the screen display. The notification list is a list of pieces of information on the audio satisfying the set condition. In the present embodiment, the notification list is a list of pieces of event information. An event is an utterance including a search word. Details of the notification list are described later. The controller 27 sets the playback timing to a timing immediately after the user instructs playback of the utterance. That is, when the notification condition satisfies the second condition, the controller 27 plays the utterance including the search word in response to an input from the user. With such a configuration, the utterance including the search word is manually played.

### <Input/Output Process>

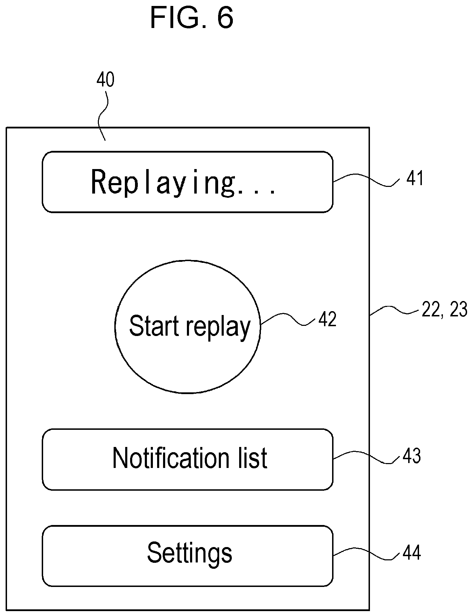

The controller 27 receives an input from a user with the input unit 22. Based on the input received with the input unit 22, the controller 27 makes selection of a screen to be displayed on the display unit 23, or the like. For example, based on the input received with the input unit 22, the controller 27 displays a screen illustrated in FIG. 6, 7, or 8. In the configuration illustrated in FIGs. 6 to 8, the input unit 22 is a touch screen integrated with the display of the display unit 23.

Amain screen 40 illustrated in FIG. 6 includes an area 41, an area 42, an area 43, and an area 44.

The area 41 displays the state of the sound collector 10. In FIG. 6, the area 41 displays information "Replaying ..." which indicates that the sound collector 10 is performing replay.

When the audio processing system 1 is in the through mode, the area 42 displays characters "Start replay". When the audio processing system 1 is in the playback mode, the area 42 displays characters "Stop replay". The controller 27 can receive an input to the area 42 with the input unit 22.

When the area 42 displays the characters "Start replay", that is, when the audio processing system 1 is in the through mode, the controller 27 can receive an input to the area 42 with the input unit 22 to receive the start replay. Upon receiving the start replay, the controller 27 sets the replay flag to true and outputs a replay instruction to an utterance accumulating unit 32 described later.

When the area 42 displays the characters "Stop replay", that is, when the audio processing system 1 is in the playback mode, the controller 27 can receive an input to the area 42 with the input unit 22 to receive the stop replay. Upon receiving the stop replay, the controller 27 sets the replay flag to false and transmits a replay stop instruction to the sound collector 10 via the communication unit 21.

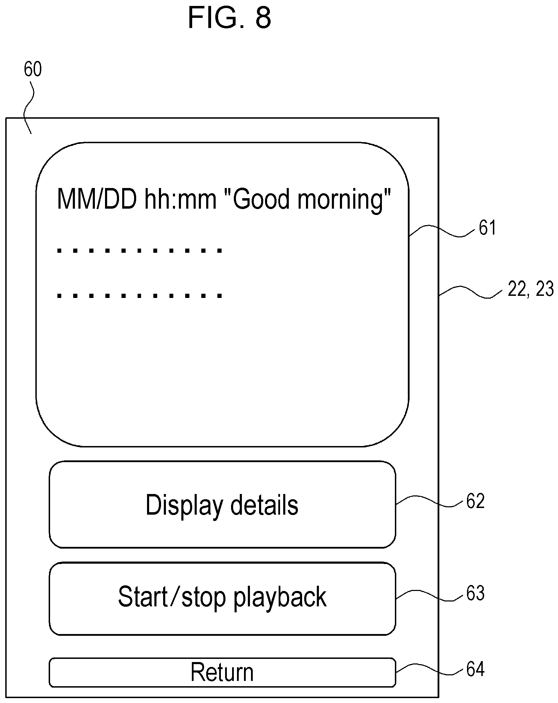

The area 43 displays characters "Notification list". The controller 27 can receive an input to the area 43 with the input unit 22. When the controller 27 receives an input to the area 43 with the input unit 22, the controller 27 causes the display unit 23 to display a notification screen 60 illustrated in FIG. 8.

The area 44 displays characters "Settings". The controller 27 can receive an input to the area 44 with the input unit 22. When the controller 27 receives an input to the area 44 with the input unit 22, the controller 27 causes the display unit 23 to display the setting screen 50 illustrated in FIG. 7.

The setting screen 50 illustrated in FIG. 7 is a screen for the user to make various settings. The setting screen 50 includes an area 51, an area 52, an area 53, an area 54, an area 55, and an area 56.

The area 51 displays characters "Add search word". The controller 27 can receive an input to the area 51 with the input unit 22. The controller 27 receives an input of a search word and an input of a priority corresponding to the search word via the area 51.

The area 52 displays the set search words. In FIG. 7, the area 52 displays the search words "Flight 153", "Hello", and "Good morning". The controller 27 can receive an input to the area 52 with the input unit 22. When the controller 27 receives an input to the area 52 with the input unit 22, the controller 27 causes the display unit 23 to display the search list illustrated in FIG. 3.

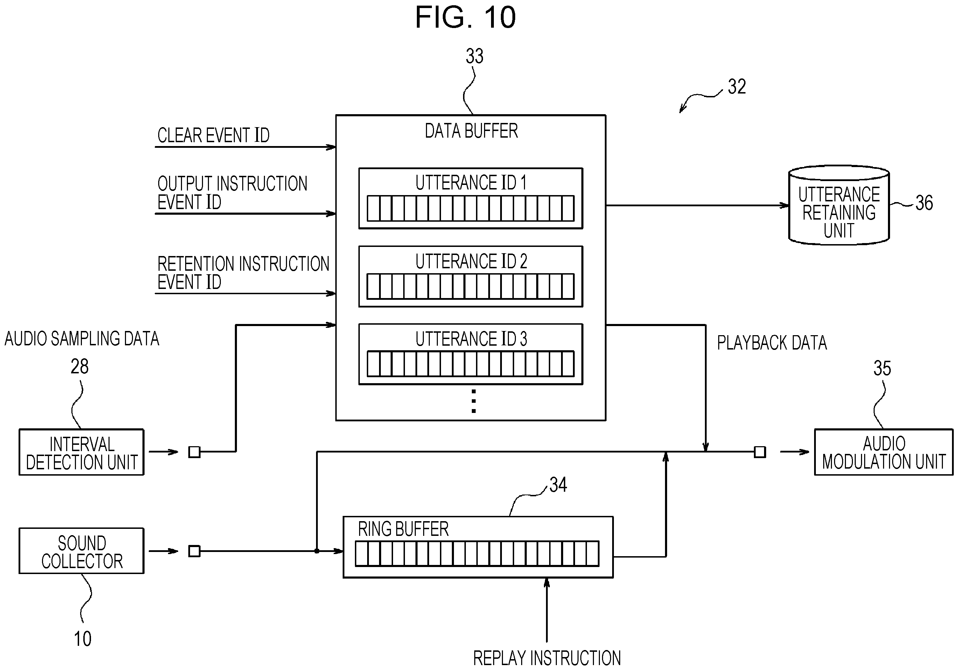

The area 53 displays characters "Recording buffer setting". The area 53 is used to set a length of a recording time for which audio of sound collected by the sound collector 10 is to be recorded. In the present embodiment, the audio sampling data having duration of the recording time is accumulated in a ring buffer 34 illustrated in FIG. 10 described later. The controller 27 can receive an input to the area 53 with the input unit 22. The controller 27 receives an input of the recording time such as 5 seconds, 10 seconds, and 15 seconds, for example. The controller 27 causes the storage unit 26 to store the received information of the recording time.

The area 54 displays characters "Speed setting". The area 54 is used to set a playback speed of the audio output from the sound collector 10. The controller 27 can receive an input to the area 54 with the input unit 22. The controller 27 receives an input of the audio speed of 1× speed, 1.1× speed, and 1.2× speed, for example. The controller 27 causes the storage unit 26 to store the received information of the audio speed.

The area 55 displays characters "Audio threshold setting". The area 55 is used to set an audio threshold for cutting audio as noise from the audio of the sound collected by the sound collector 10. In the present embodiment, audio equal to or lower than the audio threshold is cut as noise. The controller 27 can receive an input to the area 55 with the input unit 22. The controller 27 receives an input of the audio threshold from -50 [dBA] to -5 [dBA], for example. The controller 27 causes the storage unit 26 to store the received information of the audio threshold.

The area 56 displays characters "End settings". The controller 27 can receive an input to the area 56 with the input unit 22. When the controller 27 receives an input to the area 56 with the input unit 22, the controller 27 causes the display unit 23 to display the main screen 40 illustrated in FIG. 6.

The notification screen 60 illustrated in FIG. 8 is a screen for notifying the user of various kinds of information. The notification screen 60 includes an area 61, an area 62, an area 63, and an area 64.

The area 61 displays a notification list. As described above, the notification list is a list of pieces of event information. As described above, an event is an utterance including a search word. The controller 27 causes a piece of event information whose priority is "low" among the events included in the notification list to be displayed in the area 61. However, the controller 27 may cause all the pieces of event information included in the notification list to be displayed in the area 61 irrespective of the priority. The controller 27 can receive an input for each event in the notification list displayed in the area 61 with the input unit 22. The controller 27 receives an input for each event in the notification list with the input unit 22 via the area 61 to receive selection of an event in the notification list.

The area 62 displays characters "Display details". The controller 27 can receive an input to the area 62 with the input unit 22. The controller 27 may receive selection of an event included in the notification list via the area 61 and further receive an input to the area 62 with the input unit 22. In this case, the controller 27 causes the display unit 23 to display, in the area 61, the details of the event information selected via the area 61. For example, the controller 27 displays, as the details of the event information, a left audio recognition result and a right audio recognition result which are described later.

The area 63 displays characters "Start/stop playback". The controller 27 can receive an input to the area 63 with the input unit 22 to receive the start playback or the stop playback. While an utterance is not played, the controller 27 receives selection of an event included in the notification list via the area 61 and further receives an input to the area 63 with the input unit 22 to receive the start playback for the event. Upon receiving the start playback for the event, the controller 27 performs control with which the event selected via the area 61, that is, the utterance is played. In the present embodiment, with reference to the notification list in the storage unit 26, the controller 27 acquires an event ID, which is described later, of the event selected via the area 61. The controller 27 outputs the event ID and a playback start instruction to an utterance retaining unit 36, which is described later, and performs control with which the utterance is played. While the utterance is being played, the controller 27 receives an input to the area 63 with the input unit 22 to receive the stop playback for the event. Upon receiving the stop playback for the event, the controller 27 performs control with which playback of the utterance stops. In the present embodiment, the controller 27 transmits a playback stop instruction to the sound collector 10 via the communication unit 21, and performs control with which playback of the utterance stops.

The area 64 displays characters "Return". The controller 27 can receive an input to the area 64 with the input unit 22. When the controller 27 receives an input to the area 64 with the input unit 22, the controller 27 causes the display unit 23 to display the main screen 40 illustrated in FIG. 6.

### <Audio Processing>

As illustrated in FIG. 2, the controller 27 includes an interval detection unit 28, an audio recognition unit 29, an event detection unit 30, an utterance notification unit 31, the utterance accumulating unit 32, an audio modulation unit 35, and the utterance retaining unit 36. The utterance retaining unit 36 includes the same or similar components as or to the storage unit 26. At least part of the utterance retaining unit 36 may be part of the storage unit 26. An operation of the utterance retaining unit 36 is performed by the processor or the like of the controller 27.

The interval detection unit 28 receives the audio sampling data from the sound collector 10 via the communication unit 21. The interval detection unit 28 detects an utterance interval from the audio sampling data. An utterance interval is an interval for which an utterance state continues. The interval detection unit 28 detects an utterance interval from the audio sampling data, and thus can also detect a non-utterance interval. The non-utterance interval is an interval for which a non-utterance state continues. A start point of the utterance interval is also referred to as an "utterance start time point". The start point of the utterance interval is an end point of the non-utterance interval. An end point of the utterance interval is also referred to as an "utterance end time point". The end point of the utterance interval is a start point of the non-utterance interval.

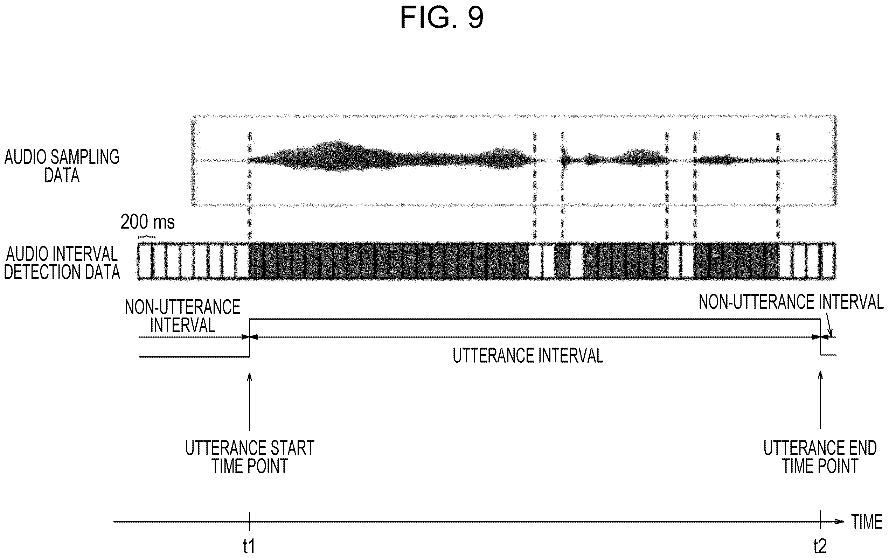

An example of a process of the interval detection unit 28 is described with reference to FIG. 9. Note that the process of the interval detection unit 28 is not limited to the process described with reference to FIG. 9. The interval detection unit 28 may detect an utterance interval from the audio sampling data by using any method. As another example, the interval detection unit 28 may detect an utterance interval from the audio sampling data by using a machine learning model generated using any machine learning algorithm.

In FIG. 9, a horizontal axis represents time. The audio sampling data illustrated in FIG. 9 is acquired by the audio acquisition unit 16 of the sound collector 10. The interval detection unit 28 acquires audio interval detection data from the audio sampling data. The audio interval detection data is data obtained by averaging the power of the audio sampling data by a time width set in advance. The time width of the audio interval detection data may be set based on a specification of the audio processing apparatus 20 or the like. In FIG. 9, one piece of audio interval detection data is illustrated as one quadrangle. The time width of this one quadrangle, that is, the time width of one piece of audio interval detection data is, for example, 200 [ms].

The interval detection unit 28 acquires the information of the audio threshold from the storage unit 26, and classifies the pieces of the audio interval detection data into audio data and non-audio data. In FIG. 9, the audio data is dark-colored pieces of data among the pieces of audio interval detection data illustrated as quadrangles. The non-audio data is white-colored pieces of data among the pieces of audio interval detection data illustrated as quadrangles. When a value of a piece of audio interval detection data is null, the interval detection unit 28 classifies the piece of audio interval detection data as non-audio data. When a value of a piece of audio interval detection data is not null and the piece of audio interval detection data is less than the audio threshold, the interval detection unit 28 classifies the piece of audio interval detection data as non-audio data. When a value of a piece of audio interval detection data is not null and the value of the piece of audio interval detection data is equal to or greater than the audio threshold, the interval detection unit 28 classifies the piece of audio interval detection data as audio data.

The interval detection unit 28 detects, as an utterance interval, an interval for which the audio data continues without interruption for a set time. The set time may be set based on a language to be processed by the audio processing apparatus 20. The set time is, for example, 500 [ms] when the language to be processed is Japanese. In FIG. 9, when the interval detection unit 28 detects audio data after non-audio data continues for a time exceeding the set time, the interval detection unit 28 identifies a detection time point of the audio data as the utterance start time point. For example, the interval detection unit 28 identifies a time t1 as the utterance start time point. When the interval detection unit 28 determines that non-audio data has continued for a time exceeding the set time after identifying the utterance start time point, the interval detection unit 28 identifies the time point at which the determination is made as the utterance end time point. For example, the interval detection unit 28 identifies a time t2 as the utterance end time point. The interval detection unit 28 detects an interval from the utterance start time point to the utterance end time point as an utterance interval.

The interval detection unit 28 may receive the left audio sampling data and the right audio sampling data from the sound collector 10. In this case, when the interval detection unit 28 detects audio data in either the left audio sampling data or the right audio sampling data after non-audio data continues for a time exceeding the set time in both of the left audio sampling data and the right audio sampling data, the interval detection unit 28 may identify a detection time point of the audio data as the utterance start time point. When the interval detection unit 28 determines that the non-audio data has continued for a time exceeding the set time in both of the left audio sampling data and the right audio sampling data, the interval detection unit 28 may identify the time point at which the determination is made as the utterance end time point.

Upon identifying the utterance start time point from the audio sampling data, the interval detection unit 28 generates an utterance ID. The utterance ID is identification information that enables unique identification of each utterance. The interval detection unit 28 outputs the information on the utterance start time point and the utterance ID to each of the audio recognition unit 29 and the utterance accumulating unit 32.

Upon identifying the utterance end time point from the audio sampling data, the interval detection unit 28 outputs information on the utterance end time point to each of the audio recognition unit 29 and the utterance accumulating unit 32.

The interval detection unit 28 sequentially outputs the audio sampling data received from the sound collector 10, to each of the audio recognition unit 29 and the utterance accumulating unit 32.

The audio recognition unit 29 acquires the information on the utterance start time point and the utterance ID from the interval detection unit 28. Upon acquiring the information on the utterance start time point and the like, the audio recognition unit 29 performs an audio recognition process for recognizing audio on the audio sampling data sequentially acquired from the interval detection unit 28. In the present embodiment, the audio recognition unit 29 converts audio data included in the audio sampling data into text data by the audio recognition process to recognize audio.

The audio recognition unit 29 outputs the information on the utterance start time point and the utterance ID acquired from the interval detection unit 28 to the event detection unit 30. Upon outputting the information on the utterance start time point and the like to the event detection unit 30, the audio recognition unit 29 sequentially outputs the text data, which is an audio recognition result, to the event detection unit 30.

The audio recognition unit 29 acquires the information on the utterance end time point from the interval detection unit 28. Upon acquiring the information on the utterance end time point, the audio recognition unit 29 ends the audio recognition process. The audio recognition unit 29 outputs the information on the utterance end time point acquired from the interval detection unit 28 to the event detection unit 30. Then, the audio recognition unit 29 may acquire information on a new utterance start time point and a new utterance ID from the interval detection unit 28. Upon acquiring the information on the new utterance start time point and the like, the audio recognition unit 29 performs the audio recognition process again on audio sampling data sequentially acquired from the interval detection unit 28.

The audio recognition unit 29 may acquire the left audio sampling data and the right audio sampling data from the interval detection unit 28. In this case, the audio recognition unit 29 may convert each of the left audio sampling data and the right audio sampling data into text data. Hereinafter, the text data acquired from the left audio sampling data is also referred to as "left text data" or a "left audio recognition result". The text data acquired from the right audio sampling data is also referred to as "right text data" or a "right audio recognition result.

The event detection unit 30 acquires the information on the utterance start time point and the utterance ID from the audio recognition unit 29. After acquiring the information on the utterance start time point and the like, the event detection unit 30 sequentially acquires the text data from the audio recognition unit 29. With reference to the search list illustrated in FIG. 3, the event detection unit 30 determines whether the text data sequentially acquired from the audio recognition unit 29 includes any one of the search words in the search list.

When the event detection unit 30 determines that the text data includes a search word, the event detection unit 30 detects, as an event, an utterance including the search word. Upon detecting the event, the event detection unit 30 acquires, as an event ID, the utterance ID acquired from the audio recognition unit 29. With reference to the search list illustrated in FIG. 3, the event detection unit 30 acquires a priority corresponding to the search word included in the text data. Upon acquiring the priority, the event detection unit 30 performs a notification process corresponding to the priority.

When the priority is "high", upon determining that the text data includes the search word, the event detection unit 30 outputs the event ID and an output instruction to the utterance accumulating unit 32 and outputs the priority "high" to the utterance notification unit 31. The output instruction is an instruction to cause the utterance accumulating unit 32 to output the audio sampling data corresponding to the event ID to the audio modulation unit 35 as playback data. Upon outputting the output instruction, the event detection unit 30 sets the replay flag to true. As described above, when the priority is "high", the output instruction and the like are output to the utterance accumulating unit 32 and the like immediately after the search word included in the text data is detected. With such a configuration, when the priority is "high" as illustrated in FIG. 5, immediately after the search word is detected, the notification sound is played and playback of the utterance is started.

When the priority is "intermediate", upon acquiring the information on the utterance end time point from the audio recognition unit 29, the event detection unit 30 outputs the event ID and the output instruction to the utterance accumulating unit 32 and outputs the priority "intermediate" to the utterance notification unit 31. Upon outputting the output instruction, the event detection unit 30 sets the replay flag to true. As described above, when the priority is "intermediate", the output instruction and the like are output to the utterance accumulating unit 32 and the like at a time point of the end of the utterance. With such a configuration, when the priority is "intermediate" as illustrated in FIG. 5, immediately after the utterance including the search word ends, the notification sound is played and playback of the utterance is started.

When the priority is "low", upon acquiring the information on the utterance end time point from the audio recognition unit 29, the event detection unit 30 outputs the event ID and a retention instruction to the utterance accumulating unit 32 and outputs the priority "low" to the utterance notification unit 31. The retention instruction is an instruction to cause the utterance accumulating unit 32 to output the audio sampling data corresponding to the event ID to the utterance retaining unit 36. The audio sampling data retained in the utterance retaining unit 36 is played in response to the user giving a playback instruction as described above with reference to FIG. 8. With such a configuration, when the priority is "low" as illustrated in FIG. 5, immediately after the user gives the playback instruction, the utterance including the search word is played.

The event detection unit 30 updates the notification list stored in the storage unit 26, based on the event ID, the priority, the detection date and time of the event, and the search word included in the text data. The notification list in the storage unit 26 includes, for example, association of the event ID, the priority, the detection date and time of the event, the search word, and the text data with one another. As an example of an update process, the event detection unit 30 associates the event ID, the priority, the detection date and time, the search word, and the text data with one another. The event detection unit 30 includes this association in the notification list to update the notification list.

The event detection unit 30 determines whether the text data includes a search word until the event detection unit 30 acquires the information on the utterance end time point from the audio recognition unit 29. When the event detection unit 30 determines that the text data sequentially acquired from the audio recognition unit 29 includes none of the search words at the acquisition time point of the information on the utterance end time point, the event detection unit 30 acquires, as a clear event ID, the utterance ID acquired from the audio recognition unit 29. The event detection unit 30 outputs the clear event ID to the utterance accumulating unit 32.

The event detection unit 30 may acquire information on a new utterance start time point and a new utterance ID from the audio recognition unit 29. Upon acquiring the information on the new utterance start time point and the like, the event detection unit 30 determines whether text data newly acquired sequentially from the audio recognition unit 29 includes any one of the search words in the search list.

The event detection unit 30 may acquire left text data and right text data from the audio recognition unit 29. In this case, when the event detection unit 30 determines that either the left text data or the right text data includes a search word, the event detection unit 30 may detect, as an event, an utterance including the search word. If the event detection unit 30 determines that both of the left text data and the right text data include none of the search words, the event detection unit 30 may acquire, as the clear event ID, the utterance ID corresponding to these pieces of text data.

The utterance notification unit 31 acquires the priority from the event detection unit 30. The utterance notification unit 31 acquires a notification sound file corresponding to the priority from the storage unit 26. The utterance notification unit 31 transmits the acquired notification sound file to the sound collector 10 via the communication unit 21.

When the priority is "high", with reference to the notification sound list illustrated in FIG. 4, the utterance notification unit 31 acquires the notification sound file "ring.wav" associated with the priority "high" from the storage unit 26. The utterance notification unit 31 transmits the acquired notification sound file to the sound collector 10 via the communication unit 21.

When the priority is "intermediate", with reference to the notification sound list illustrated in FIG. 4, the utterance notification unit 31 acquires the notification sound file "alert.wav" associated with the priority "intermediate" from the storage unit 26. The utterance notification unit 31 transmits the acquired notification sound file to the sound collector 10 via the communication unit 21.

When the priority is "low", with reference to the notification sound list illustrated in FIG. 4, the utterance notification unit 31 acquires the notification sound file "notify.wav" associated with the priority "low" from the storage unit 26. The utterance notification unit 31 transmits the acquired notification sound file to the sound collector 10 via the communication unit 21.

As illustrated in FIG. 10, the utterance accumulating unit 32 includes a data buffer 33 and the ring buffer 34. The data buffer 33 and the ring buffer 34 include the same or similar components as or to the storage unit 26. At least part of the data buffer 33 and at least part of the ring buffer 34 may be part of the storage unit 26. An operation of the utterance accumulating unit 32 is performed by the processor or the like of the controller 27.

The utterance accumulating unit 32 acquires the information on the utterance start time point and the utterance ID from the interval detection unit 28. Upon acquiring the information on the utterance start time point and the like, the utterance accumulating unit 32 causes the audio sampling data sequentially acquired from the interval detection unit 28 to be accumulated in the data buffer 33 in association with the utterance ID. Upon acquiring information on a new utterance start time point and a new utterance ID from the interval detection unit 28, the utterance accumulating unit 32 causes the audio sampling data sequentially acquired from the interval detection unit 28 to be accumulated in the data buffer 33 in association with the new utterance ID. In FIG. 10, multiple pieces of audio sampling data corresponding to an utterance ID 1, multiple pieces of audio sampling data corresponding to an utterance ID 2, and multiple pieces of audio sampling data corresponding to an utterance ID 3 are accumulated in the data buffer 33.

The utterance accumulating unit 32 receives the audio sampling data from the sound collector 10 via the communication unit 21. The utterance accumulating unit 32 accumulates the audio sampling data received from the sound collector 10 in the ring buffer 34. With reference to information on the recording time stored in the storage unit 26, the utterance accumulating unit 32 accumulates the audio sampling data having duration of the recording time in the ring buffer 34. The utterance accumulating unit 32 sequentially accumulates the audio sampling data in the ring buffer 34 in time series.

The utterance accumulating unit 32 may acquire the clear event ID from the event detection unit 30. Upon acquiring the clear event ID, the utterance accumulating unit 32 deletes the audio sampling data associated with the utterance ID that matches the clear event ID from among the pieces of audio sampling data accumulated in the data buffer 33.

The utterance accumulating unit 32 may acquire the event ID and the output instruction from the event detection unit 30. Upon acquiring the output instruction, the utterance accumulating unit 32 identifies an utterance ID that matches the event ID acquired together with the output instruction from among the pieces of audio sampling data accumulated in the data buffer 33. The utterance accumulating unit 32 outputs the pieces of audio sampling data corresponding to the identified utterance ID to the audio modulation unit 35 as playback data. The utterance accumulating unit 32 outputs the pieces of audio sampling data to the audio modulation unit 35 such that the pieces of audio sampling data are played from the start. The start of the pieces of audio sampling data is a piece of audio sampling data at the oldest time among the multiple pieces of audio sampling data in time series.

The utterance accumulating unit 32 may acquire the event ID and the retention instruction from the event detection unit 30. Upon acquiring the retention instruction, the utterance accumulating unit 32 identifies an utterance ID that matches the event ID acquired together with the retention instruction from among the pieces of audio sampling data accumulated in the data buffer 33. The utterance accumulating unit 32 outputs the audio sampling data associated with the identified utterance ID to the utterance retaining unit 36 together with the event ID.

The utterance accumulating unit 32 may acquire the replay instruction. When the utterance accumulating unit 32 acquires the replay instruction, the utterance accumulating unit 32 outputs the pieces of audio sampling data accumulated in the ring buffer 34 to the audio modulation unit 35 as playback data such that the pieces of audio sampling data are played from the start.

As illustrated in FIG. 2, the audio modulation unit 35 acquires playback data from the utterance accumulating unit 32. When the replay flag is trule, with reference to the information of the audio speed stored in the storage unit 26, the audio modulation unit 35 modulates the playback data such that the playback data is played as audio at the audio speed. The audio modulation unit 35 transmits the modulated playback data to the sound collector 10 via the communication unit 21.

The utterance retaining unit 36 acquires the event ID and the audio sampling data from the utterance accumulating unit 32. The utterance retaining unit 36 retains the acquired audio sampling data in association with the acquired event ID.

The utterance retaining unit 36 may acquire the event ID and the playback start instruction. Upon acquiring the playback start instruction, the utterance retaining unit 36 identifies the audio sampling data associated with the event ID. The utterance retaining unit 36 transmits the identified audio sampling data to the sound collector 10 via the communication unit 21 as playback data.

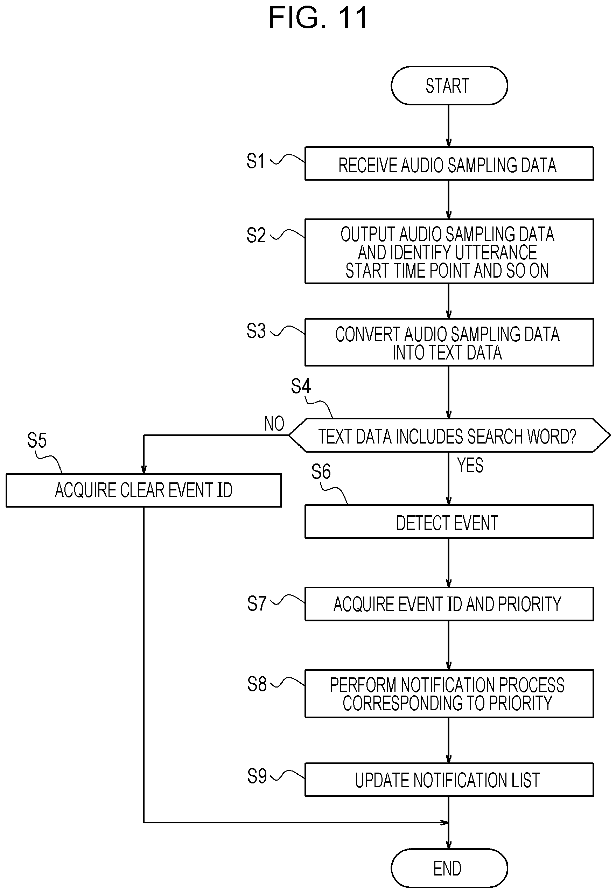

FIG. 11 is a flowchart illustrating an operation of an event detection process performed by the audio processing apparatus 20 illustrated in FIG. 2. This operation corresponds to an example of an audio processing method according to the present embodiment. For example, in response to the start of transmission of the audio sampling data from the sound collector 10 to the audio processing apparatus 20, the audio processing apparatus 20 starts processing of step S1.

The interval detection unit 28 receives the audio sampling data from the sound collector 10 via the communication unit 21 (step S1).

In processing of step S2, the interval detection unit 28 sequentially outputs the audio sampling data acquired in the processing of step S1 to each of the audio recognition unit 29 and the utterance accumulating unit 32.

In the processing of step S2, the interval detection unit 28 identifies the utterance start time point from the audio sampling data acquired in the processing of step S1. Upon identifying the utterance start time point, the interval detection unit 28 generates an utterance ID. The interval detection unit 28 outputs the information on the utterance start time point and the utterance ID to each of the audio recognition unit 29 and the utterance accumulating unit 32.

In the processing of step S2, the interval detection unit 28 identifies the utterance end time point from the audio sampling data acquired in the processing of step S1. Upon identifying the utterance end time point, the interval detection unit 28 outputs information on the utterance end time point to each of the audio recognition unit 29 and the utterance accumulating unit 32.

In processing of step S3, upon acquiring the information on the utterance start time point and the like from the interval detection unit 28, the audio recognition unit 29 sequentially converts the audio sampling data sequentially acquired from the interval detection unit 28 into text data. Upon outputting the information on the utterance start time point and the like to the event detection unit 30, the audio recognition unit 29 sequentially outputs the text data, which is the audio recognition result, to the event detection unit 30. Upon acquiring the information on the utterance end time point from the interval detection unit 28, the audio recognition unit 29 ends the audio recognition process. Note that, upon acquiring information on a new utterance start time point and the like from the interval detection unit 28, the audio recognition unit 29 sequentially converts the audio sampling data sequentially acquired from the interval detection unit 28 into text data.

In processing of step S4, with reference to the search list illustrated in FIG. 3, the event detection unit 30 determines whether the text data sequentially acquired from the audio recognition unit 29 includes any one of the search words in the search list.

If the event detection unit 30 determines that the sequentially acquired text data includes none of the search words at the time point of the acquisition of the information on the utterance end time point from the audio recognition unit 29 (step S4: NO), the process proceeds to processing of step S5. If the event detection unit 30 determines that the text data sequentially acquired from the audio recognition unit 29 includes a search word by the acquisition of the information on the utterance end time point (step S4: YES), the process proceeds to processing of step S6.

In the processing of step S5, the event detection unit 30 acquires, as a clear event ID, the utterance ID acquired from the audio recognition unit 29. The event detection unit 30 outputs the clear event ID to the utterance accumulating unit 32.

In the processing of step S6, the event detection unit 30 detects, as an event, an utterance including the search word.

In processing of step S7, the event detection unit 30 acquires, as an event ID, the utterance ID acquired from the audio recognition unit 29. With reference to the search list illustrated in FIG. 3, the event detection unit 30 acquires a priority corresponding to the search word included in the text data.

In processing of step S8, the event detection unit 30 performs the notification process corresponding to the priority acquired in the processing of step S7.

In processing of step S9, the event detection unit 30 updates the notification list stored in the storage unit 26, based on the event ID, the priority, the detection date and time of the event, and the search word included in the text data.

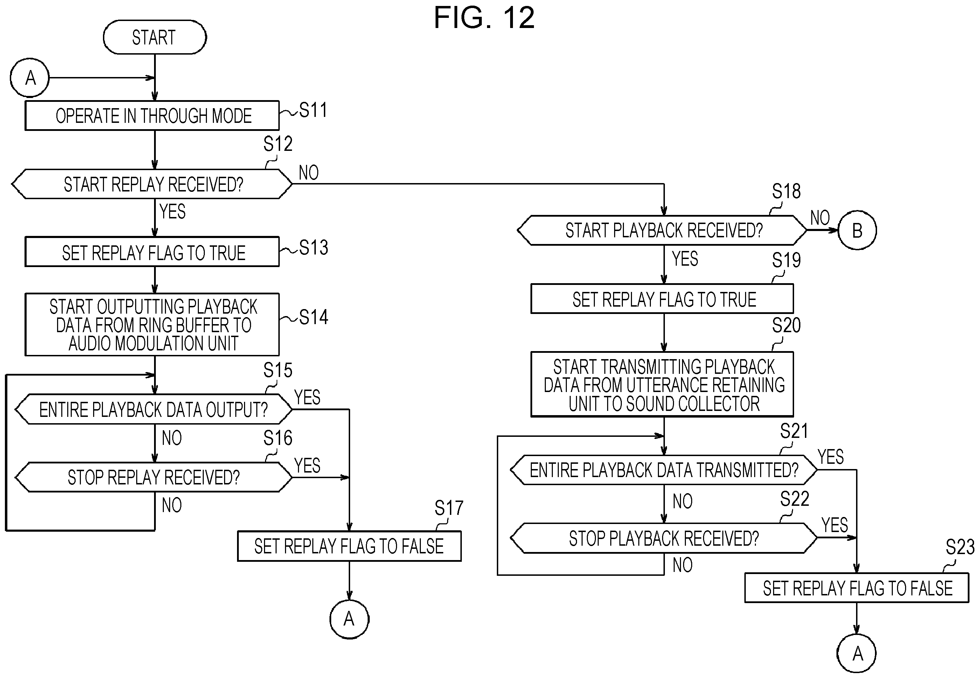

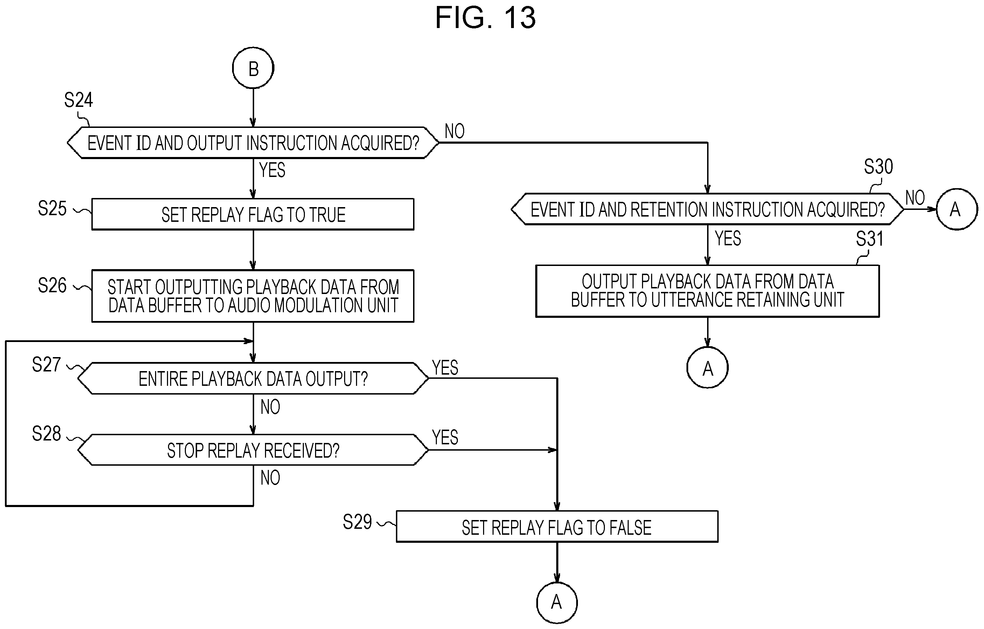

FIGs. 12 and 13 are flowcharts illustrating an operation of a playback data output process performed by the audio processing apparatus 20 illustrated in FIG. 2. This operation corresponds to an example of an audio processing method according to the present embodiment. For example, in response to the start of transmission of the audio sampling data from the sound collector 10 to the audio processing apparatus 20, the audio processing apparatus 20 starts processing of step S11 illustrated in FIG. 12.

In the processing of step S11, the audio processing apparatus 20 operates in the through mode. In the sound collector 10, the audio playback unit 17 causes the speaker 12 to output the audio sampling data acquired from the audio acquisition unit 16. In the processing of step S11, the replay flag is set to false.

In processing of step S12, the controller 27 determines whether the start replay is received by receiving an input to the area 42 illustrated in FIG. 6 via the input unit 22. If the controller 27 determines that the start replay is received (step S12: YES), the process proceeds to processing of step S13. If the controller 27 does not determine that the start replay is received (step S12: NO), the process proceeds to processing of step S18.

In the processing of step S13, the controller 27 sets the replay flag to true, and outputs a replay instruction to the utterance accumulating unit 32.

In processing of step S14, the utterance accumulating unit 32 acquires the replay instruction. Upon acquiring the replay instruction, the utterance accumulating unit 32 starts outputting playback data from the ring buffer 34 to the audio modulation unit 35.

In processing of step S15, the controller 27 determines whether the entire playback data is output from the ring buffer 34 to the audio modulation unit 35. If the controller 27 determines that the entire playback data is output (step S15: YES), the process proceeds to processing of step S17. If the controller 27 does not determine that the entire playback data is output (step S15: NO), the process proceeds to processing of step S16.

In the processing of step S16, the controller 27 determines whether the stop replay is received by receiving an input to the area 42 illustrated in FIG. 6 via the input unit 22. If the controller 27 determines that the stop replay is received (step S16: YES), the process proceeds to the processing of step S17. If the controller 27 does not determine that the stop replay is received (step S16: NO), the process returns to the processing of step S15.

In the processing of step S17, the controller 27 sets the replay flag to false. After the controller 27 performs the processing of step S17, the process returns to the processing of step S11.

In the processing of step S18, the controller 27 determines whether the start playback for an event is received by receiving an input to the area 63 illustrated in FIG. 8 via the input unit 22. If the controller 27 determines that the start playback for an event is received (step S18: YES), the process proceeds to processing of step S19. If the controller 27 does not determine that the start playback for an event is received (step S18: NO), the process proceeds to processing of step S24 illustrated in FIG. 13.

In the processing of step S19, the controller 27 sets the replay flag to true. With reference to the notification list in the storage unit 26, the controller 27 acquires the event ID of the event selected in the area 61 illustrated in FIG. 8. The controller 27 outputs the event ID and a playback start instruction to the utterance retaining unit 36.

In processing of step S20, the utterance retaining unit 36 acquires the event ID and the playback start instruction. Upon acquiring the playback start instruction, the utterance retaining unit 36 identifies the audio sampling data associated with the event ID. The utterance retaining unit 36 starts transmitting the identified audio sampling data, that is, playback data to the sound collector 10.

In the processing of step S21, the controller 27 determines whether the entire playback data is transmitted from the utterance retaining unit 36 to the sound collector 10. If the controller 27 determines that the entire playback data is transmitted (step S21: YES), the process proceeds to processing of step S23. If the controller 27 does not determine that the entire playback data is transmitted (step S21: NO), the process proceeds to processing of step S22.

In the processing of step S22, the controller 27 determines whether the stop playback for the event is received by receiving an input to the area 63 illustrated in FIG. 8 via the input unit 22. If the controller 27 determines that the stop playback for the event is received (step S22: YES), the process proceeds to the processing of step S23. If the controller 27 does not determine that the stop playback for the event is not received (step S22: NO), the process returns to the processing of step S21.

In the processing of step S23, the controller 27 sets the replay flag to false. After the controller 27 performs the processing of step S23, the process returns to the processing of step S11.

In the processing of step S24 illustrated in FIG. 13, the utterance accumulating unit 32 determines whether the event ID and the output instruction are acquired from the event detection unit 30. If the utterance accumulating unit 32 determines that the event ID and the output instruction are acquired (step S24: YES), the process proceeds to processing of step S25. If the utterance accumulating unit 32 does not determine that the event ID and the output instruction are acquired (step S24: NO), the process proceeds to processing of step S30.

In the processing of step S25, the replay flag is set to true. The event detection unit 30 sets the replay flag to true when the output instruction in the processing of step S24 is output to the utterance accumulating unit 32 by the event detection unit 30.

In processing of step S26, the utterance accumulating unit 32 identifies an utterance ID that matches the event ID acquired in the processing of step S24 from among the pieces of audio sampling data accumulated in the data buffer 33. The utterance accumulating unit 32 acquires audio sampling data corresponding to the identified utterance ID as playback data. The utterance accumulating unit 32 starts outputting the playback data from the data buffer 33 to the audio modulation unit 35.

In processing of step S27, the controller 27 determines whether the entire playback data is output from the data buffer 33 to the audio modulation unit 35. If the controller 27 determines that the entire playback data is output (step S27: YES), the process proceeds to processing of step S29. If the controller 27 does not determine that the entire playback data is output (step S27: NO), the process proceeds to processing of step S28.

In the processing of step S28, the controller 27 determines whether the stop replay is received by receiving an input to the area 42 illustrated in FIG. 6 via the input unit 22. If the controller 27 determines that the stop replay is received (step S28: YES), the process proceeds to the processing of step S29. If the controller 27 does not determine that the stop replay is received (step S28: NO), the process returns to the processing of step S27.

In the processing of step S29, the controller 27 sets the replay flag to false. After the controller 27 performs the processing of step S29, the process returns to the processing of step S11 illustrated in FIG. 12.

In the processing of step S30, the utterance accumulating unit 32 determines whether the event ID and the retention instruction are acquired from the event detection unit 30. If the utterance accumulating unit 32 determines that the event ID and the retention instruction are acquired (step S30: YES), the process proceeds to processing of step S31. If the utterance accumulating unit 32 does not determine that the event ID and the retention instruction are acquired (step S30: NO), the controller 27 returns the process to the processing of step S11 illustrated in FIG. 12.

In the processing of step S31, the utterance accumulating unit 32 identifies an utterance ID that matches the event ID acquired in the processing of step S30 from among the pieces of audio sampling data accumulated in the data buffer 33. The utterance accumulating unit 32 outputs the audio sampling data associated with the identified utterance ID to the utterance retaining unit 36 together with the event ID.

After the processing of step S31 is performed, the controller 27 returns the process to the processing of step S11 illustrated in FIG. 12.

As described above, in the audio processing apparatus 20, when the controller 27 detects audio satisfying the set condition, the controller 27 notifies the user that the audio satisfying the set condition has been detected, in accordance with the notification condition. In the present embodiment, when the controller 27 detects an utterance including a search word as the audio satisfying the set condition, the controller 27 notifies the user that the utterance has been detected, in accordance with the priority set for the search word.

For example, depending on the content of the audio satisfying the set condition, a user sometimes desires to preferentially receive a notification that the audio has been detected or sometimes does not desire to preferentially receive the notification. In the present embodiment, the user can set the priority as the notification condition to distinguish between the audio for which the notification about detection is preferentially made and the audio for which the notification about detection is not preferentially made. Therefore, the audio processing apparatus 20 can improve the user's convenience.

If the audio satisfying the set condition is merely played in response to detection of the audio, the user may miss the played audio. The audio processing apparatus 20 notifies the user that the audio has been detected, and thus can reduce the possibility of the user missing the played audio.

Therefore, the present embodiment can provide the improved audio processing apparatus 20, the improved audio processing method, and the improved audio processing system 1.

If the notification condition corresponding to the detected audio satisfies the first condition, the controller 27 of the audio processing apparatus 20 may play notification sound to notify the user that the audio satisfying the set condition has been detected. As described above, since the notification sound is played, the user can immediately notice that the audio has been detected.

If the notification condition corresponding to the detected audio satisfies the first condition, the controller 27 of the audio processing apparatus 20 may play the audio satisfying the set condition after playing the notification sound. As described above, such a configuration can improve the user's convenience.

If the notification condition corresponding to the detected audio satisfies the second condition, the controller 27 of the audio processing apparatus 20 may present visual information to the user to notify the user that the audio satisfying the set condition has been detected. As described above, the second condition is lower than the first condition, the third condition, and the fourth condition in the priority order of notifying the user. When the priority order is low, the visual information is presented to the user instead of playing the notification sound, so that a notification corresponding to the low priority order can be made.

If the notification condition corresponding to the detected audio satisfies the second condition, the controller 27 of the audio processing apparatus 20 may present the notification list to the user to present the visual information to the user. By viewing the notification list, the user can learn the detection date and time of the audio and can learn how the audio has been detected.

If the notification condition corresponding to the detected audio satisfies the second condition, the controller 27 of the audio processing apparatus 20 may play the detected audio in response to an input from the user. When the priority order is low, the user is highly likely to desire to check the detected audio later. Such a configuration can improve the user's convenience.

If the notification condition corresponding to the detected audio satisfies the third condition, the controller 27 of the audio processing apparatus 20 may perform control with which, immediately after the search word is detected, the notification sound is played and playback of the utterance is started. With such a configuration, the user can immediately check the content of the utterance when the priority order is high.

If the notification condition corresponding to the detected audio satisfies the fourth condition, the controller 27 of the audio processing apparatus 20 may perform control with which, immediately after the utterance ends, the notification sound is played and playback of the utterance is started. Playback of the utterance is started immediately after the end of the utterance, so that the utterance made in real time and the played utterance do not overlap. With such a configuration, the user can more accurately learn the content of the played utterance.

The controller 27 of the audio processing apparatus 20 may perform control with which the audio data of the utterance interval including the detected utterance is played. As described above with reference to FIG. 9, the utterance interval is an interval for which the audio data continues without interruption for a set time. The audio data of such an utterance interval is played, so that the utterance including the search word is collectively played. With such a configuration, the user can understand the meaning of the utterance including the search word.

The controller 27 of the audio processing apparatus 20 may cause the display unit 23 to display the detection date and time of the event, that is, the utterance and the search word included in the utterance among the pieces of information included in the notification list irrespective of the priority. With such a configuration, the user can learn how the detected utterance has been made.

### (Other Embodiments)

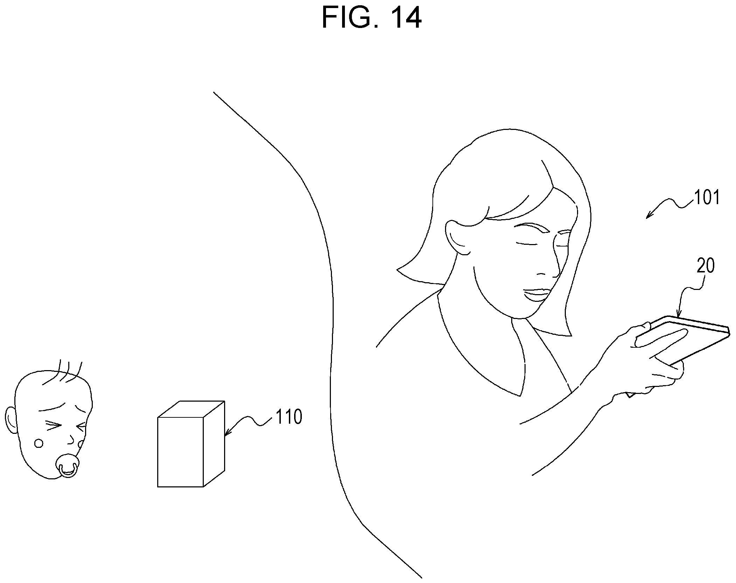

An audio processing system 101 illustrated in FIG. 14 can provide a watch over service for a baby or the like. The audio processing system 101 includes a sound collector 110 and the audio processing apparatus 20.

The sound collector 110 and the audio processing apparatus 20 are located farther from each other than the sound collector 10 and the audio processing apparatus 20 illustrated in FIG. 1. For example, the sound collector 110 and the audio processing apparatus 20 are located in different rooms. The sound collector 110 is located in a room where a baby is present. The audio processing apparatus 20 is located in a room where a user is present.

In the another embodiment, a set condition is a condition that a feature of detected audio matches an audio feature set in advance. The user may input the audio feature which the user desires to set as the set condition from a microphone of the input unit 22 of the audio processing apparatus 20 illustrated in FIG. 2, and set the audio feature as the set condition in the audio processing apparatus 20. For example, the user sets a feature of a crying voice of a baby as the set condition in the audio processing apparatus 20.

The sound collector 110 includes the microphone 11, the speaker 12, the communication unit 13, the storage unit 14, and the controller 15 illustrated in FIG. 2. The sound collector 110 need not include the speaker 12.

The audio processing apparatus 20 may further include the speaker 12 illustrated in FIG. 2. The controller 27 of the audio processing apparatus 20 may further include the audio playback unit 17 and the accumulating unit 18 illustrated in FIG. 2.

In the another embodiment, the storage unit 26 illustrated in FIG. 2 stores a search list in which data indicating an audio feature and a priority are associated with each other, instead of the search list illustrated in FIG. 3. The data indicating the audio feature may be data of a feature quantity of audio that can be processed by a machine learning model used by the audio recognition unit 29. The feature quantity of audio is, for example, an MFCC (Mel-frequency Cepstrum Coefficient) or a PLP (Perceptual Linear Prediction). For example, the storage unit 26 stores a search list in which data representing a crying voice of a baby and a priority "high" are associated with each other.

In the another embodiment, the controller 27 illustrated in FIG. 2 detects, as the audio satisfying the set condition, audio whose feature matches the audio feature set in advance.

The audio recognition unit 29 acquires the information on the utterance start time point, the information on the utterance end time point, the utterance ID, and the audio sampling data from the interval detection unit 28 in the same manner as or similar manner to that in the above-described embodiment. In the another embodiment, the audio recognition unit 29 determines whether the feature of the audio in the utterance interval matches the audio feature set in advance, by an audio recognition process using a learning model generated by any machine learning algorithm.

If the audio recognition unit 29 determines that the feature of the audio in the utterance interval matches the audio feature set in advance, the audio recognition unit 29 outputs a result indicating the match that is an audio recognition result, the utterance ID of the utterance interval, and data indicating the audio feature to the event detection unit 30. If the feature of the audio in the utterance interval does not match the audio feature set in advance, the audio recognition unit 29 outputs a result indicating the mismatch that is an audio recognition result and the utterance ID of the utterance interval to the event detection unit 30.

The event detection unit 30 may acquire the result indicating the match that is the audio recognition result, the utterance ID, and the data indicating the audio feature set in advance from the audio recognition unit 29. Upon acquiring the result indicating the match, the event detection unit 30 detects, as an event, audio whose feature matches the audio feature set in advance. Upon detecting the event, the event detection unit 30 acquires, as an event ID, the utterance ID acquired from the audio recognition unit 29. With reference to the search list, the event detection unit 30 acquires a priority corresponding to the data indicating the audio feature acquired from the audio recognition unit 29. The event detection unit 30 performs a notification process corresponding to the acquired priority in the same manner as or similar manner to that in the above-described embodiment.

The event detection unit 30 may acquire the result indicating the mismatch that is the audio recognition result and the utterance ID from the audio recognition unit 29. Upon acquiring the result indicating the mismatch, the event detection unit 30 acquires, as a clear event ID, the utterance ID acquired from the audio recognition unit 29. The event detection unit 30 outputs the clear event ID to the utterance accumulating unit 32.

The process of the audio processing apparatus 20 according to the another embodiment is not limited to the above-described process. As another example, the controller 27 may create a classifier that can classify multiple kinds of audio. Based on a result obtained by inputting audio data of sound collected by the sound collector 110 to the created classifier, the controller 27 may determine which priority the audio of the sound collected by the sound collector 110 corresponds to.

Other effects and configurations of the audio processing system 101 according to the another embodiment are the same as or similar to those of the audio processing system 1 illustrated in FIG. 1.

While the present disclosure has been described based on the various drawings and embodiments, it is to be noted that a person skilled in the art can easily make various variations or corrections based on the present disclosure. Therefore, it is to be noted that these variations or corrections are within the scope of the present disclosure. For example, the functions and the like included in the individual functional units can be rearranged without causing any logical contradiction. Multiple functional units or the like may be combined into one or may be divided. The embodiments according to the present disclosure described above are not limited to strict implementation according to the respective embodiments described above, and may be implemented by appropriately combining the features or omitting part thereof. That is, a person skilled in the art can make various variations and corrections to the contents of the present disclosure based on the present disclosure. Accordingly, these variations and corrections are within the scope of the present disclosure. For example, in each embodiment, each functional unit, each means, each step, or the like can be added to another embodiment or replaced with each functional unit, each means, each step, or the like in another embodiment without causing any logical contradiction. In each embodiment, multiple functional units, means, steps, or the like may be combined into one or may be divided. The embodiments of the present disclosure described above are not limited to strict implementation according to the respective embodiments described above, and may be implemented by appropriately combining the features or omitting part thereof.

For example, the controller 27 of the audio processing apparatus 20 may detect multiple kinds of audio respectively satisfying different set conditions in one utterance interval. In this case, the controller 27 may notify the user that the audio satisfying the set condition has been detected in accordance with each of multiple notification conditions respectively set for the different set conditions. Alternatively, the controller 27 may notify the user that the audio satisfying the set condition has been detected in accordance with some of the multiple notification conditions respectively set for the different set conditions. The some of the multiple notification conditions may be notification conditions that satisfy a selection condition. The selection condition is a condition selected in advance based on a user operation or the like from among the first condition, the second condition, the third condition, and the fourth condition. Alternatively, the some of the multiple notification conditions may be notification conditions included in up to an N-th (where N is an integer of 1 or greater) priority order from the highest priority order of notifying the user. The priority order is determined by each of the multiple notification conditions. N may be set in advance based on a user operation or the like. For example, the controller 27 may detect multiple search words different from each other in one utterance interval. In this case, the controller 27 may perform a process corresponding to each of multiple priorities respectively set for the multiple search words different from each other. Alternatively, the controller 27 may perform a process corresponding to some of the multiple priorities respectively set for the multiple search words different from each other. The some of the multiple priorities may be, for example, priorities included in up to an N-th priority order from the highest priority order.

For example, the controller 27 of the audio processing apparatus 20 may detect audio satisfying the same set condition multiple times in one utterance interval. In this case, the controller 27 may perform the process of notifying the user in accordance with the notification condition just once for the one utterance interval, or may perform the process as many times as the audio satisfying the set condition has been detected. For example, the controller 27 may detect the same search word multiple times in one utterance interval. In this case, the controller 27 may perform the process corresponding to the priority just once for the one utterance interval, or may perform the process as many times as the search word has been detected.

For example, the interval detection unit 28 illustrated in FIG. 2 may stop detection of an utterance interval while the replay flag is set to true.

For example, in the audio processing system 101 illustrated in FIG. 14, the audio feature set in advance as the set condition is described to be the feature of the crying voice of a baby. However, the audio feature set in advance as the set condition is not limited to the feature of the crying voice of a baby. Any audio feature may be set as the set condition in accordance with the use situation of the audio processing system 101. As another example, a feature of voice of a boss, an intercom ringtone, or a telephone ringtone may be set as the set condition.

For example, in the above-described embodiments, the priority is described to be set in three levels including "high", "intermediate", and "low". However, the priority is not limited to being set in three levels. The priority may be set in multiple levels. For example, the priority may be set in multiple levels of two levels or four or more levels.

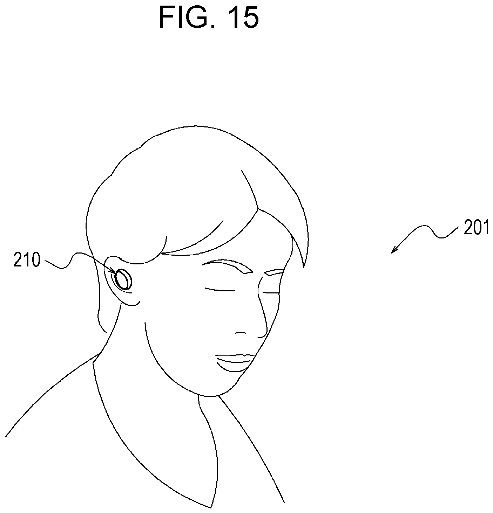

For example, in the above-described embodiments, the sound collector 10 and the audio processing apparatus 20 are described to be separate apparatuses. However, the sound collector 10 and the audio processing apparatus 20 may be configured as a single apparatus. An example of this is described with reference to FIG. 15. An audio processing system 201 illustrated in FIG. 15 includes a sound collector 210. The sound collector 210 is an earphone. The sound collector 210 performs the process of the audio processing apparatus 20. That is, the sound collector 210 that is an earphone serves as the audio processing apparatus of the present disclosure. The sound collector 210 includes the microphone 11, the speaker 12, the communication unit 13, the storage unit 14, and the controller 15 illustrated in FIG. 2. The controller 15 of the sound collector 210 includes components corresponding to those of the controller 27 of the audio processing apparatus 20. The storage unit 14 of the sound collector 210 stores the notification list. The sound collector 210 may perform the screen display and the light emission which are the notification means illustrated in FIG. 5, by using another terminal apparatus such as a smartphone of the user. For example, the controller 15 of the sound collector 210 transmits the notification list in the storage unit 14 to the smartphone or the like of the user via the communication unit 13, and causes the smartphone or the like of the user to display the notification list.

For example, in the above-described embodiments, the audio processing apparatus 20 is described to perform the audio recognition process. However, an external apparatus other than the audio processing apparatus 20 may perform the audio recognition process. The controller 27 of the audio processing apparatus 20 may acquire a result of the audio recognition process performed by the external apparatus. The external apparatus may be, for example, a dedicated computer that functions as a server, a general-purpose personal computer, or a cloud computing system. In this case, the communication unit 13 of the sound collector 10 may further include at least one communication module that can be connected to any network including a mobile communication network and the Internet, in the same manner as or similarly manner to the communication unit 21. In the sound collector 10, the controller 15 may transmit the audio sampling data to the external apparatus via the network with the communication unit 13. Upon receiving the audio sampling data from the sound collector 10 via the network, the external apparatus may perform the audio recognition process. The external apparatus may transmit the result of the audio recognition process to the audio processing apparatus 20 via the network. In the audio processing apparatus 20, the controller 27 may receive the result of the audio recognition process from the external apparatus via the network with the communication unit 21 to acquire the result.

For example, in the above-described embodiments, the audio processing apparatus 20 is described to be a terminal apparatus. However, the audio processing apparatus 20 is not limited to the terminal apparatus. As another example, the audio processing apparatus 20 may be a dedicated computer that functions as a server, a general-purpose personal computer, or a cloud computing system. In this case, the communication unit 13 of the sound collector 10 may further include at least one communication module that can be connected to any network including a mobile communication network and the Internet, in the same manner as or similarly manner to the communication unit 21. The sound collector 10 and the audio processing apparatus 20 may communicate with each other via the network.

For example, an embodiment is also possible in which a general-purpose computer is caused to function as the audio processing apparatus 20 according to the above-described embodiments. Specifically, a program in which processing contents for implementing each function of the audio processing apparatus 20 according to the above-described embodiments are written is stored in a memory of the general-purpose computer, and the program is read and executed by a processor. Therefore, the configuration according to the above-described embodiments can also be implemented as a program executable by a processor or a non-transitory computer-readable medium storing the program.

### REFERENCE SIGNS

1, 101, 201 audio processing system
10, 110, 210 sound collector
11 microphone
12 speaker
13 communication unit
14 storage unit
15 controller
16 audio acquisition unit
17 audio playback unit
18 accumulating unit
20 audio processing apparatus
21 communication unit
22 input unit
23 display unit
24 vibration unit
25 light-emitting unit
26 storage unit
27 controller
28 interval detection unit
29 audio recognition unit
30 event detection unit
31 utterance notification unit
32 utterance accumulating unit
33 data buffer
34 ring buffer
35 audio modulation unit
40 main screen
41, 42, 43, 44 area
50 setting screen
51, 52, 53, 54, 55, 56 area
60 notification screen
61, 62, 63, 64 area

## Claims

1. An audio processing apparatus comprising:
a controller configured to:
acquire a result of an audio recognition process for recognizing audio from audio data; and
in response to audio satisfying a set condition being detected based on the result of the audio recognition process, notify a user that the audio satisfying the set condition has been detected, in accordance with a notification condition corresponding to the detected audio, the set condition being set in advance for audio, the notification condition being set for the detected audio in the set condition.

2. The audio processing apparatus according to claim 1, wherein
the controller is configured to:
when the notification condition satisfies a first condition, play notification sound to notify the user that the audio satisfying the set condition has been detected;
when the notification condition satisfies a second condition, present visual information to the user to notify the user that the audio satisfying the set condition has been detected, and
a priority order of notifying the user is lower when the notification condition satisfies the second condition than when the notification condition satisfies the first condition.

3. The audio processing apparatus according to claim 2, wherein the controller is configured to, when the notification condition satisfies the first condition, play the notification sound and then play the audio satisfying the set condition.

4. The audio processing apparatus according to claim 2 or 3, wherein the controller is configured to, when the notification condition satisfies the second condition, present a notification list to the user to present the visual information to the user, the notification list being a list of pieces of information of the detected audio satisfying the set condition.

5. The audio processing apparatus according to any one of claims 2 to 4, wherein the controller is configured to, when the notification condition satisfies the second condition, play the audio satisfying the set condition in response to an input from the user.

6. The audio processing apparatus according to any one of claims 1 to 5, wherein
the set condition is a condition regarding a match with an audio feature set in advance,
a notification condition is set for the audio feature, and
the controller is configured to detect, as the audio satisfying the set condition, audio whose feature matches the audio feature set in advance.

7. The audio processing apparatus according to any one of claims 1 to 5, wherein
the set condition is a condition regarding inclusion of a search word set in advance,
a notification condition is set for the search word, and
the controller is configured to detect, as the audio satisfying the set condition, an utterance including the search word.

8. The audio processing apparatus according to claim 7, wherein the controller is configured to, when the notification condition corresponding to the detected utterance satisfies a third condition, perform control with which, immediately after the search word is detected, notification sound is played and playback of the utterance is started.

9. The audio processing apparatus according to claim 8, wherein
the controller is configured to, when the notification condition corresponding to the detected utterance satisfies a fourth condition, perform control with which, immediately after the utterance ends, notification sound is played and playback of the utterance is started, and
a priority order of notifying the user is lower when the notification condition satisfies the fourth condition than when the notification condition satisfies the third condition.

10. The audio processing apparatus according to claim 8 or 9, wherein
the controller is configured to perform control with which audio data of an utterance interval including the detected utterance is played, and
the utterance interval is an interval for which the audio data continues without interruption for a set time.

11. An audio processing method comprising:
acquiring a result of an audio recognition process for recognizing audio from audio data; and
in response to audio satisfying a set condition being detected based on the result of the audio recognition process, notifying a user that the audio satisfying the set condition has been detected, in accordance with a notification condition corresponding to the detected audio, the set condition being set in advance for audio, the notification condition being set for the detected audio in the set condition.

12. An audio processing system comprising:
a sound collector configured to collect sound of surroundings; and
an audio processing apparatus configured to:
acquire a result of an audio recognition process for recognizing audio from audio data of the sound collected by the sound collector; and
in response to audio satisfying a set condition being detected based on the result of the audio recognition process, notify a user that the audio satisfying the set condition has been detected, in accordance with a notification condition corresponding to the detected audio, the set condition being set in advance for audio, the notification condition being set for the detected audio in the set condition.
